# EUROPEAN PATENT APPLICATION

(11) **EP 4 167 093 A1**
(43) Date of publication of application: **19.04.2023**
(21) Application number: 21202903.7
(22) Date of filing: 15.10.2021
(51) Int. Cl.: G06F 11/30, G06F 9/455, G06F 9/50, G06F 11/34, G06F 11/20

(54) **REMOTELY OPERATED SYSTEM AND USE OF THE SYSTEM BASED ON EDGE-CLOUD INFRASTRUCTURE**

(71) Applicant: Siemens Aktiengesellschaft, 80333 München (DE)
(72) Inventor: Huth, Hans-Peter, 80638 München (DE); Sauer, Markus, 81739 München (DE); Zeiger, Florian, 85635 Höhenkirchen-Siegertsbrunn (DE)
(74) Representative: Siemens Patent Attorneys

(57) **Abstract**

The invention discloses a remotely operated system, comprising:
- at least one edge-cloud system designed as a computing and storage system and designed to run virtualized applications,
- at least one I/O interfaces designed to access, control, configure and operate hardware resources of the remotely operated system,
- at least one virtualized I/O interface implemented in the edge-cloud system and designed to virtualize the I/O interface and to be available inside the edge-cloud system in such a way, that functions realized in the edge-cloud system only use the virtualized I/O interfaces,
- a communication module configured to externally communicate and connect the remotely operated system to further systems, and
- an edge-network designed to interconnect different edge-cloud systems and to provide a communication link to the communication module of the remotely operated system.

The invention further discloses a use of the remotely operated system.

## Description

### FIELD OF THE INVENTION

The present invention relates to a remotely operated system, e.g., satellite, that realizes redundancy and failure recovery component integration through function virtualization based on edge computing technologies and operation.

### BACKGROUND OF THE INVENTION

Although the level of ubiquitous access to communication and computing and reliability of technical components has significantly increased, there are still a lot of systems which are hardly physically accessible (e.g., systems in space like satellites, spaceships, or industrial offshore systems like pipelines, wind parks, ocean sensor nodes) and/or which are critical to operation of infrastructure.

Thus, this kind of systems need a high-level of autonomy in ensuring the operation of their core and use case related functions. This autonomy includes detection and mitigation of failures (failure-recovery, failure impact reduction strategies, etc.). Typically, these requirements are today handled by simple replication of hardware and SW components, such that in case one component fails, another replicate can take over the function of the failed component.

There are a lot of advanced concepts to realize this failure-detection, failure-handling, and failure recovery, but still all rely on hardware replication, dedicated matching of (especially software) functions to specific hardware components and hereby the system design gets highly complex.

In addition, there is little flexibility in the redundancy concepts - e.g., one redundant component can take over one specific function of one specific component. A flexible usage for multiple operational functions is typically not foreseen. This also significantly reduces the opportunities to react to cases, which have not yet been considered during the design phase and new requirements.

But today's available technologies, concepts, and system designs, allow for new concepts to fulfill these resiliency requirements especially for all software implemented functions, such that standard multi-purpose computer hardware in combination with software-based operation autonomy functions can be used, to ensure the operation of the equipment with critical availability.

The requirements for system resilience to failures for continuous operation and potential self-recovery from failures is in today's systems typically still realized by complex redundancy concepts in hardware. Systems which are important for operation are realized two or more times to have backup systems, which can take over, in case one system fails. Existing approaches for remotely operated systems use special hardware with dedicated and static assignment to a (SW) function (example: three onboard computational units on a UAV, all of them operating independently, while one is the master flight controller, and the two others are backup flight controllers) or use redundant hardware systems (e.g., two different speed sensors using different technologies). A flexible usage of computational hardware in combination with dynamic assignment of functionalities realized in SW to detect or react on failures are not foreseen in these designs.

### SUMMARY OF THE INVENTION

The objective of the present invention is to provide a solution for remotely operated systems to simplify hardware design and therefor reduce cost of the equipment, but also to increase options and flexibility for fail-save operation and recovery.

To accomplish the objective, the present invention provides a solution according to the independent claims. Advantageous embodiments are provided in the dependent claims.

According to a first aspect the disclosure proposes a technical solution to realize redundancy and failure recovery component integration through function virtualization based on edge computing technologies and operation and system health optimized orchestration of functions in remotely operated equipment with heavy demand on continuous operation of core functions and components.

The disclosure empowers a system designer and operator to both simplify the hardware design and hereby reduce the cost for the equipment but also the options and flexibility for fail-save operation and recovery is significantly increased. In addition, system operators are given additional flexibility to use the currently not needed redundant computational power, to perform temporary additional computational tasks e.g., from payload applications.

The disclosure proposes a software function virtualization. Focus of the disclosure lies on scalability issues, multi-purpose and efficient usage of computational hardware, and the maintainability of the computational infrastructure by computer hardware abstraction through virtualization.

The proposed system enables flexible usage of multi-purpose computational hardware together with computational hardware and IO virtualization to realize fail-safe, resilient operation of hardly accessible systems

Major difference of the disclosure to prior art is that through the introduction of computing hardware virtualization and I/O virtualization, existing computing hardware in a remotely operated system, can be used flexible to realize advanced fail-safe and -recovery mechanisms without the need to integrate further additional dedicated hardware.

The disclosed system allows a novel approach for implementing reliable operation paradigms for remotely operated systems by using edge-cloud technology together with I/O interfacing for virtual application end points as well as interconnections of edge-cloud systems through edge-networks. With an increasing number of remotely operated devices (e.g., satellite constellations or robot swarms) these edge-cloud systems can be interconnected so that edge-networks dynamically allow for communication between applications hosted on edge-cloud systems across different remotely operated devices.

Not only a more reliable operation of remotely operated devices is possible, but also a more efficient resource usage is enabled by a distributed deployment of application environments on different remotely operated devices. By extending that system towards ground stations, also terrestrial edge and cloud infrastructure can take over some of the functions in case of high-level of system failures.

The disclosure also supports the paradigm shift towards using multi-purpose HW in specialized environments (e.g., space). The traditional use of specialized HW had the drawbacks of slow technological progress, as well as limited performance of the HW components. Multi-purpose HW pushes more computing, storage, as well as AI-acceleration into these special application domains and allow faster more resource efficient, and less expensive solutions.

The invention discloses a remotely operated system, comprising:
- at least one edge-cloud system designed as a computing and storage system and designed to run virtualized applications,
- at least one I/O interfaces designed to access, control, configure and operate hardware resources of the remotely operated system,
- at least one virtualized I/O interface implemented in the edge-cloud system and designed to virtualize the I/O interface and to be available inside the edge-cloud system in such a way, that functions realized in the edge-cloud system only use the virtualized I/O interfaces,
- a communication module configured to externally communicate and connect the remotely operated system to further systems, and
- an edge-network designed to interconnect different edge-cloud systems and to provide a communication link to the communication module of the remotely operated system.

A remotely operated system cannot be controlled and maintained by human beings on site during its operation.

In a further embodiment a space satellite, an exploration vehicle, or an autonomous guided vehicle with corresponding payloads comprises the system. Payloads are for example cameras, sensors, or actuators.

In a further embodiment the edge-cloud system is designed to provide multi-purpose computing capabilities to the remotely operated system through a virtualized, interconnected computing runtime environment.

Hereby, the switching between functions on different edge-cloud systems is controllable and simpler, and the fixed binding of different I/O interfaces to edge-cloud systems can be avoided.

In a further embodiment the edge-network is designed for resource sharing, so that virtual networks can be embedded for communication between virtualized applications within an edge-cloud system and between virtualized applications on different edge-cloud systems.

In a further embodiment the communication module is designed to establish a bi-directional communication link between different remotely operated systems, so that resources of edge-cloud systems be shareable across remotely operated systems.

In a further embodiment the is designed to host more than one communication module, either with providing multiple links of the same communication technology or providing a set of communication links based on different communication technologies.

The invention further discloses a use of the disclosed system for failure handling, whereby:
- two edge-cloud systems are running and host user/payload applications,
- each edge-cloud system has a pre-defined virtualized I/O interface to one I/O interface and has a standby virtualized I/O interface to at least one further I/O interface, so in case an I/O interface failure occurs, it is switched to another working I/O interface, and
- the virtualized I/O interfaces are used to control the hardware resources HW and to operate payload applications.

The invention further discloses the use of the disclosed system for handling failures of an edge-cloud system in an environment with at least two active remotely operated systems, whereby:
- each remotely operated system comprises at least two edge-cloud systems running, wherein each edge-cloud system has a pre-defined virtualized I/O interface to one I/O interface and has a standby virtualized I/O interface to at least one further I/O interface,
- the virtualized I/O interfaces are used to control the hardware resources HW and to operate payload applications, and
- in case of failure of an edge-cloud system of a remotely operated system payload applications of that edge-cloud system are re-distributed across active edge-cloud systems of another remotely operated system.

The invention finally discloses the use of the disclosed system for payload usage across a first remotely operated system and a second remotely operated system, whereby:
- the first remotely operated system comprises a first payload, that is not available on the second remotely operated system, and a corresponding first payload application running on the first remotely operated system,
- both remotely operated systems are connected via the communication module that is designed to deploy on-demand edge-networks between the edge-cloud systems of both remotely operated systems,
- the virtualized I/O interfaces are used to control the hardware resources HW and to operate payload applications,
- user applications on the second system are requesting a re-allocation of a second payload application for direct hosting on the first remotely operated system, and
- the second payload application is deployed through the edge-cloud systems to the first remotely operated system and after startup, the first payload is accessible to the second payload application.

Through the established edge-network, other user/payload applications on the second system get access to the first payload on the first system.

Further benefits and advantages of the present invention will become apparent after a careful reading of the detailed description with appropriate reference to the accompanying drawings.

### BRIEF DESCRIPTION OF THE DRAWINGS

- FIG. 1: shows a block diagram of the main units of the remotely operated system,
- FIG. 2: shows a block diagram of an embodiment providing backup system hosting of payload applications on another satellite, and
- FIG. 3: shows a block diagram of using external HW devices (e.g., special camera on another satellite) by hosting the corresponding payload application close to the corresponding HW device.

### DETAILED DESCRIPTION OF THE INVENTION

In the following description, the remotely operated systems are exemplary space satellites. But without any limitations they can be notably autonomous guided vehicles or other remotely operated industrial and consumer equipment.

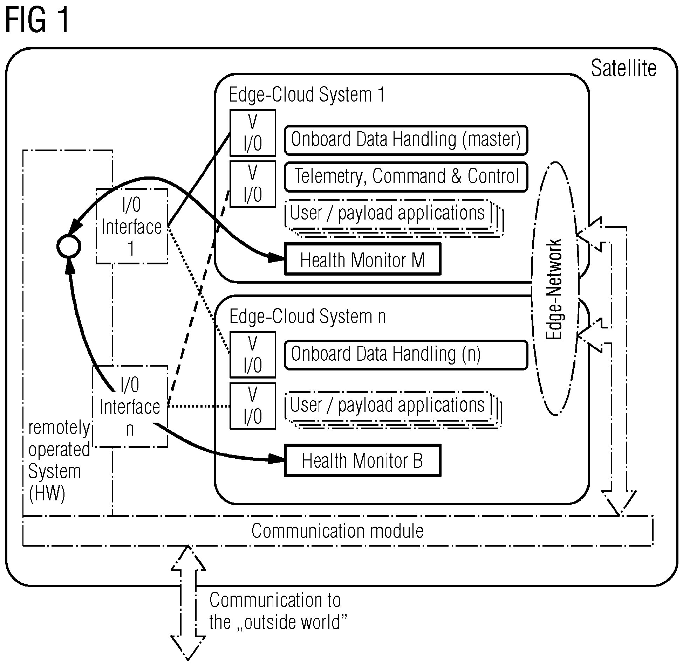

FIG. 1 illustrates an embodiment by using a simplified block diagram. The design of remotely operated systems that are enabled with edge-cloud technologies to be operated more reliable and more efficient in terms of computing and storage resources is disclosed. The main units of the disclosed system are:

Remotely operated system: The remotely operated system can be any kind of system that cannot be "touched" during its operations. Typical examples are satellites or exploration vehicles with the corresponding payloads (e.g., cameras, sensors, etc.).
I/O interfaces: Each remotely operated system has a set of
I/O interfaces so that the edge-cloud systems can access, control, configure and operate the hardware resources of the remotely operated system. As soon as hardware redundancy is needed, more than one I/O interface is required.
I/O interface virtualization: Each real I/O interface of the remotely operated system is virtualized and made available inside the edge-cloud system, such that functions realized in the virtualized edge-cloud Systems only use the virtualized I/O interfaces. Hereby, the switching between functions on different edge-cloud systems is controllable and simpler, and the fixed binding of different I/O to edge-cloud systems can be avoided.

Edge-cloud system: The edge-cloud system is a computing and storage system that can run virtualized applications (e.g., virtual machines, containers). A remotely operated system usually has more than one edge-cloud system and each edge-cloud system can run and operate independent from other edge-cloud systems of the remotely operated system. Each edge-cloud system provides multi-purpose computing capabilities to the overall system, through a virtualized, interconnected computing runtime environment.

Edge-network: The edge-network interconnects each of the edge-cloud systems and provides a communication link to the communication module of the remotely operated system. The edge-network also allows for resource sharing, so that virtual networks can be embedded for communication between virtualized applications within an edge-cloud system and between virtualized applications on different edge-cloud systems.

Communication module: The communication module is responsible for external communication and connectivity of the remotely operated system to the outside world. A communication module can establish a bi-directional communication link between different remotely operated systems, so that edge-cloud system resources can be shared across different remotely operated systems. Each remotely operated system can host more than one communication module, either with providing multiple links of the same communication technology or providing a set of communication links based on different communication technologies.

The edge-cloud systems now enable new approaches for failure handling and allow for a more efficient use of payloads/sensors by the payload applications. Traditional concepts for redundancy are usually limited to one remotely operated system while the proposed systems extend mechanisms for higher reliability to a system of systems approach. This is of special interest considering the planned/new satellite constellations with huge number of satellites.

To realize flexible edge-networks, virtualized network functions are used and deployed dynamically in the edge-cloud systems.

The disclosed approach can also be extended by cloud segments that are not part of the remotely operated systems, e.g., terrestrial clouds or cloud resources in aircrafts, UAVs, ships.

In the following a couple of embodiments showing the advantages of the disclosure are described.

### Embodiment FIG. 1 - Failure Handling (local)

A typical failure handling scenario can be explained as a simplified example along FIG. 1. In normal operations, two edge-cloud systems are running and host user/payload applications, as well as onboard data handling (OBDH), and telemetry, command, and control (TT&C). Applications are distributed to both edge-cloud systems so that TT&C as well as OBDH master and backup instances are hosted on different edge-cloud systems. Each edge-cloud system has a pre-defined interface to one I/O interface and has a standby interface to at least one other I/O interface, so that I/O interface failures can be addressed by switching to another working I/O interface.

TT&C and OBDH master and backup instances have watchdog components running and communicate through the edge-network with each other (e.g., monitoring the heartbeat of the counterpart). In case of failure of the master OBDH application this failure will be detected by the OBDH backup instance running on the 2^{nd} edge-cloud interface due to missing heartbeats and the backup instance will become the new master instance, taking over the operation of the system.

Of course, from now on, there will be no backup component available anymore. Payload applications will also distributed / re-allocated to the available edge-cloud systems of the remotely operated system. This setup is well known for static/physical onboard computing systems, and it can be extended towards edge-cloud systems by integrating a set of hardware I/O interfaces to the virtualization environment. Of course, the existing approaches must be extended by a) supporting a set of redundant I/O interface connections by the virtualization environment, and b) dynamically changing the used I/O interfaces.

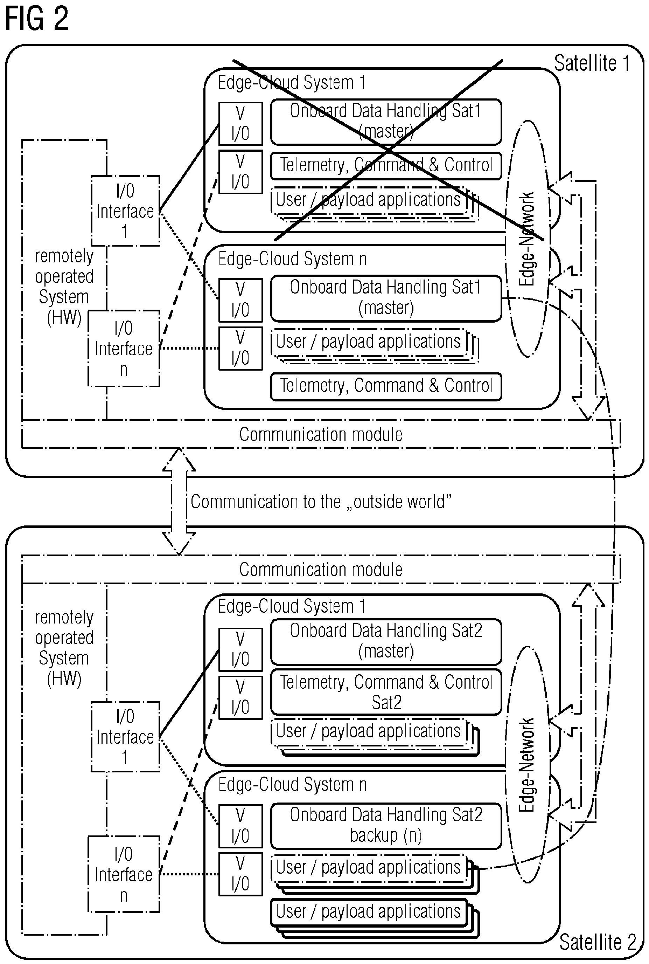

### Embodiment FIG. 2 - Failure Handling (system of systems) and efficient resource usage and workload allocation

In a system with several remotely operated systems active, the above scenario can now be extended. Assuming two satellites are flying in a constellation. Each satellite has at least two edge-cloud systems running and the TT&C and OBDH master and backup instances are distributed and running (see FIG. 2). In case of a failure of the edge-cloud system of satellite 1, the OBDH backup instance will again become the new master instance. The payload applications now can be re-distributed across the active edge-cloud systems of all connected satellites.

The steps are as follows:
1. Edge-cloud system 1 of satellite 1 fails and OBDH master, as well as payload applications on edge-cloud system 1 unexpectedly terminate.
2. OBDH backup instance of satellite 1 detects failure of the OBDH master
3. OBDH backup becomes OBDH master of satellite 1 and continues operation of satellite 1
4. Edge-cloud system 2 of satellite identifies payload applications that cannot be started locally and notifies satellite 2 (edge-cloud systems of satellite 2) that there are workloads/payload applications to be started.
5. Connections established between edge-cloud system on satellite 1 and edge-cloud systems on satellite 2.
6. Payload artefacts transferred from satellite 1 to satellite 2
7. Payload instances started on edge-cloud systems of satellite 2
8. Edge networks of satellite 1 and 2 reconfigured and virtual networks are established between payload applications on satellite 1 and satellite 2
9. Payload applications now run distributed over 2 satellites and communicate over the different edge-networks

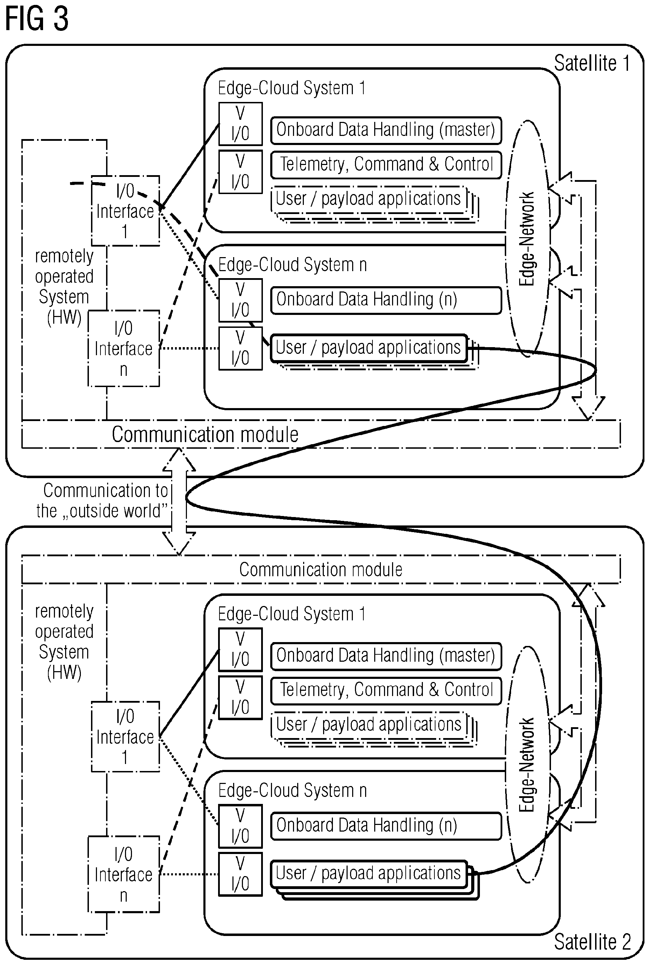

### Embodiment FIG. 3 - Payload usage across systems

In this scenario it is assumed that two satellites are equipped with the disclosed remotely operated system, whereas satellite 1 has a special set of sensors that is not available on satellite 2. Satellite 1 is operating properly and has a small amount of compute resources available. Both satellite systems are connected via the communication module that allows the on-demand deployment of edge-networks between the edge-cloud systems of the different satellites (see FIG. 3).

Thus, user applications on satellite 2 can request a re-allocation of a small payload application for direct hosting on satellite 1. This payload application then will be deployed through the proposed edge-cloud system to satellite 1 and after startup, the special payload (sensor) is accessible to the payload application. Through the established edge-network, other user/payload applications on satellite 2 get access to the special payload (sensor) on satellite 1.

One problem with the scenarios above is that failures must be detected as fast as possible to reduce or even avoid outages. As an example, the scenarios above assume a 'heartbeat' which means the Edge Cloud components send signals in regular intervals to remote components. If a heartbeat signal is not received by the remote system for a certain time span, the path over which the signal was send or the origin has failed and counteractions - as proposed above - can be applied.

An additional functional component is disclosed, a health monitor (HM), which generalizes this approach and can provide more functionality (see FIG. 3). The HM shall have the following properties respective functions:
- Device-internal monitoring of the interfaces and the redundant edge cloud components, so device internal failures can be detected immediately and handled accordingly.
- Heartbeat signals towards remote components are send of all available interfaces (if more are present).
- Heartbeats are bidirectional, meaning there is always at least one remote component which sends heartbeats towards the device in question. This allows to detect communication failures even if the device is in idle state temporarily not sending anything.

Optional: logging the heartbeats and health information of the device (i.e., CPU load and temperature) on all devices allows to apply a prediction algorithm to react even in advance.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A remotely operated system, comprising:
- at least one edge-cloud system designed as a computing and storage system and designed to run virtualized applications,
- at least one I/O interfaces designed to access, control, configure and operate hardware resources of the remotely operated system,
- at least one virtualized I/O interface implemented in the edge-cloud system and designed to virtualize the I/O interface and to be available inside the edge-cloud system in such a way, that functions realized in the edge-cloud system only use the virtualized I/O interfaces,
- a communication module configured to externally communicate and connect the remotely operated system to further systems, and
- an edge-network designed to interconnect different edge-cloud systems and to provide a communication link to the communication module of the remotely operated system.

2. The system according to claim 1, whereby a space satellite, an exploration vehicle, or an autonomous guided vehicle with corresponding payloads comprises the system.

3. The system according to claim 1 or 2, whereby the edge-cloud system is designed to provide multi-purpose computing capabilities to the remotely operated system through a virtualized, interconnected computing runtime environment.

4. The system according to one of the previous claims, whereby the edge-network is designed for resource sharing, so that virtual networks can be embedded for communication between virtualized applications within an edge-cloud system and between virtualized applications on different edge-cloud systems.

5. The system according to one of the previous claims, whereby the communication module is designed to establish a bi-directional communication link between different remotely operated systems, so that resources of edge-cloud systems be shareable across remotely operated systems.

6. The system according one of the previous claims designed to host more than one communication module, either with providing multiple links of the same communication technology or providing a set of communication links based on different communication technologies.

7. A use of a system according to one of the previous claims for failure handling, whereby:
- two edge-cloud systems are running and host user/payload applications,
- each edge-cloud system has a pre-defined virtualized I/O interface to one I/O interface and has a standby virtualized I/O interface to at least one further I/O interface, so when occurring an I/O interface failure it is switched to another working I/O interface, and
- the virtualized I/O interfaces are used to control the hardware resources HW and to operate payload applications.

8. A use of a system according to one of claims 1 to 6 for handling failures of an edge-cloud system in an environment with at least two active remotely operated systems, whereby:
- each remotely operated system comprises at least two edge-cloud systems running, wherein each edge-cloud system has a pre-defined virtualized I/O interface to one I/O interface and has a standby virtualized I/O interface to at least one further I/O interface,
- the virtualized I/O interfaces are used to control the hardware resources HW and to operate payload applications, and
- in case of failure of an edge-cloud system of a remotely operated system payload applications of that edge-cloud system are re-distributed across active edge-cloud systems of another remotely operated systems.

9. A use of a system according to one of claims 1 to 6 for payload usage across a first remotely operated system and a second remotely operated system, whereby:
- the first remotely operated system comprises a first payload, that is not available on the second remotely operated system, and a corresponding first payload application running on the first remotely operated system,
- both remotely operated systems are connected via the communication module that is designed to deploy on-demand edge-networks between the edge-cloud systems of both remotely operated systems,
- the virtualized I/O interfaces are used to control the hardware resources HW and to operate payload applications,
- user applications on the second system are requesting a re-allocation of a second payload application for direct hosting on the first remotely operated system, and
- the second payload application is deployed through the edge-cloud systems to the first remotely operated system and after startup, the first payload is accessible to the second payload application.
